Europäisches Patentamt

European Patent Office

Office européen des brevets

(11) Publication number: **0 253 400**
**A2**

(12) **EUROPEAN PATENT APPLICATION**

(21) Application number: **87110317.2**

(22) Date of filing: **16.07.87**

(51) Int. Cl.4: **C08F 114/26** , **C08F 2/54**

(30) Priority: **18.07.86 JP 169073/86**

(43) Date of publication of application:
**20.01.88 Bulletin. 88/03**

(84) Designated Contracting States:
**DE FR GB IT**

(71) Applicant: **Tabata, Yoneho**
**4-48-17-701, Honcho**
**Nakano-ku Tokyo(JP)**

Applicant: **Kawasaki Engineering Co., Ltd.**
**2-14-5, Shibuya Shibuya-ku**
**Tokyo(JP)**

(72) Inventor: **Tabata, Yoneho**
**4-48-17-701, Honcho**
**Nakano-ku Tokyo(JP)**
Inventor: **Shimada, Toshinobu**
**3-7-12, Matsugaoka Kugenuma**
**Fujisawa-shi Kanagawa-ken(JP)**

(74) Representative: **Strehl, Schübel-Hopf,**
**Groening, Schulz**
**Widenmayerstrasse 17 Postfach 22 03 45**
**D-8000 München 22(DE)**

(54) **Process for producing low-molecular weight polytetrafluoroethylene fine powder by ionizing radiation.**

(57) A polytetrafluoroethylene fine powder having a low number-average molecular weight and a particle diameter of 5 micron or less, preferably 0.5 to 0.2 microns, can be produced directly from a charged raw material and at a reduced cost by a process which comprises preparing a reaction system by adding tetrafluoroethylene monomer to a solvent consisting of acetone only or a mixed solvent containing acetone as a principal solvent so that the concentration of the monomer is 40% or less, preferably 30% or less, by volume, removing oxygen from said reaction system, substantially completely, and subjecting the reaction system to ionizing radiation at a dose of 2 Mrad or less while maintaining the temperature of the reaction system between -130°C and room temperature, preferably and -80°C and -30°C.

EP 0 253 400 A2

## PROCESS FOR PRODUCING LOW-MOLECULAR WEIGHT POLYTETRAFLUOROETHYLENE FINE POWDER BY IONIZING RADIATION

The present invention relates to a process for producing a low-molecular weight polytetrafluoroethylene fine powder by means of irradiation with ionizing radiation.

Polytetrafluoroethylene (hereinafter referred to as "PTFE") is a plastic resin which is widely used for industrial purposes by appropriate adjustment of its molecular weight and particle diameter and the demand for which is expected to increase more and more in the future. Low-molecular weight PTFE fine powders are mainly employed as additives for addition to paints, ink, lubricants and the like.

A paint which is mixed with a PTFE fine powder provides a coating film having increased strength and durability, and a lubricant which is mixed with a PTFE fine powder enables noise reduction and lowering of current consumption rate in machines in which this lubricant is used. PTFEs which have number-average molecular weights on the order of $10^6$ to $10^7$ may be formed into various kinds of member or material such as bearings, piping materials for chemical apparatuses, electrical insulating materials and sliding materials, thus making the best use of the excellent features of PTFE (e.g., chemical resistance, heat resistance, low friction properties, low dielectric constant and high resistivity) in various places. PTFE which has the various uses described above may also be applied to functional materials. Examples include medical materials such as artificial blood vessels and catheters and ion-exchange membranes. Recently, a material which is formed by impregnating a PTFE dispersion into a glass cloth and sintering the impregnated cloth has begun to be used as a roofing material for air domes, and it is expected that the demand for PTFE as a raw material for roofing materials used for air membrane structures will grow.

Almost all kinds of PTFE, from low-molecular weight ones to high molecular weight ones, have heretofore been produced by means of emulsion polymerization that uses chemical catalysts such as inorganic peroxides and organic peroxides, and some low-molecular weight PTFEs have also been produced by a method wherein high-molecular weight PTFE scrap is subjected to $\gamma$-ray and electron beam irradiation. According to the latter method, a discarded high-molecular weight PTFE product is irradiated with either $\gamma$-rays or electron irradiation at a dose of 5 to 30 Mrad to carry out a decomposition reaction by ionizing radiation to thereby produce a low-molecular weight PTFE.

The above-described conventional PTFE producing methods suffer, however, from the following disadvantages. In the production of a low-molecular weight PTFE fine powder which is to be dispersed in a solvent, it is impossible to produce the product directly from a charged raw material by either of the two methods, i.e., the method that utilizes a chemical catalyst and the method wherein PTFE scrap is irradiated with ionizing radiation.

More specifically, both the above-described two methods require the step of grinding PTFE into a fine powder. Accordingly, the manufacturing process is complicated, and the production cost is relatively high. For example, in the chemical catalyst method the production cost of a PTFE fine powder having a particle diameter of about 0.3 micron per 1 kg is about ten times that of an ordinary PTFE powder. Therefore, it is necessary to lower the production cost in the prior art methods when taking into consideration the fact that the demand for dispersion type PTFE fine powders is expected to grow due to their excellent properties.

Under these circumstances, it is a primary object of the present invention to provide a process for producing a dispersion type low-molecular weight PTFE fine powder at a reduced cost.

It should be noted that the process according to the present invention enables production not only of a dispersion type low-molecular weight PTFE fine powder but also of an ordinary high-molecular weight PTFE fine powder.

Other objects and advantages of the present invention will become apparent to those skilled in the art from the following description and disclosure.

Fig. 1 is a photograph of the particle structure of a polytetrafluoroethylene fine powder produced in accordance with the process of the present invention, the photograph being taken with a scanning electron microscope (10,000 magnification); and

Fig. 2 is graph showing the relationship between $\gamma$-ray irradiation time and polymerization yield in the process according to the present invention.

The present inventors have found a novel process for producing a low-molecular weight PTFE fine powder wherein a reaction system which is formed by adding tetrafluoroethylene (hereinafter referred to as "TFE") to a solvent consisting of acetone only or a mixed solvent containing acetone as a principal solvent is irradiated with ionizing radiation after removing oxygen substantially completely from the reaction system.

The principal feature of the process according to the present invention resides in the employment of acetone as a principal solvent and in the utilization of ionizing radiation. Thus, a low-molecular weight PTFE fine powder which is dispersed in acetone or a mixed solvent containing acetone as a principal solvent is obtained by γ-ray or electron beam irradiation at a relatively low dose, i.e., 2 Mrad or less.

Since ionizing radiation is employed as a catalyst in the process of the present invention, no catalyst residue is left in the product, which means that the product need not be refined. Accordingly, the resultant substance can be handled as a product in the state wherein it is dispersed in acetone or a mixed solvent containing acetone as a principal solvent, which is one of the advantageous features of the present invention. Further, it is advantageously possible according to the process of the invention to adjust the molecular weight and particle diameter of PTFE in accordance with the concentrations of TFE and a solvent (in the case of a mixed solvent consisting of two or more different kinds of solvent and containing acetone as a principal solvent, the kind and concentration of the other solvent) and the temperature of the reaction system at the time of ionizing radiation.

In the case where the solvent consists of acetone only, a pale blue gel in which PTFE is dispersed throughout the acetone solvent is obtained when the reaction is carried out under the conditions that the temperature of the reaction system during the ionizing radiation is between -130 °C and room temperature, preferably between -100°C and -20°C, more preferably between -80°C and -30°C, and the volume of charged TFE is 40% or less, preferably 30% or less (measured at -78°C) and about 3% or less (at room temperature), of the total volume of the charged raw material. Although there is no particular restriction on the irradiation dose of ionizing radiation, it should be noted that an irradiation dose of 2 Mrad suffices for increasing the polymerization yield to 100% and any dose in excess of said value provides no further advantage. The irradiation dose depends on the concentration of the charged TFE, and in order to obtain a yield of 100% it is necessary to carry out irradiation at 0.7 Mrad when the volume of TFE is 10% of the total volume and at 1.6 Mrad when the TFE volume is 1%. Accordingly, if the concentration of TFE is slightly smaller than 1% by volume (although this may not be a realistic assumption), it is necessary to carry out irradiation at a dose of 2 Mrad in order to obtain a polymerization yield of 100%. When the concentration of the charged TFE is 40% or less by volume, the molecular weight of the resultant PTFE is low, i.e., from 7,000 to 200,000. Although it is generally difficult to determine the molecular weight of PTFE, it is considered to be within the above-described molecular weight range when the number-average molecular weight is calculated from the result of measurement of the melting point Tm and on the basis of the following equation:

$$Mn = \frac{200}{685 \left( \dfrac{1}{Tm} - \dfrac{1}{600} \right)}$$

where
Mn: number-average molecular weight
Tm [K]: melting point of PTFE
(It should be noted that this equation is applicable to PTFEs having melting points not higher than 326°C)

The particle diameter of the resultant low-molecular weight PTFE is 5 microns or less, preferably within the range from 0.5 to 0.2 microns, although it depends on the concentration of the charged TFE and the temperature of the sample at the time of irradiation.

When the concentration of the charged TFE exceeds 40% by volume, TFE and acetone do not mix with each other uniformly and phase separation may occur. Accordingly, in order to obtain a dispersion type low-molecular weight PTFE fine powder, the proportion of TFE in the charge mixture is preferably set at 40% or less, preferably 30% or less by volume at which level no phase separation occurs. The temperature of the reaction system of ionizing radiation is also limited in order to produce a dispersion type low-molecular weight PTFE fine powder. More specifically, said temperature is preferably set within the range of from -130°C to room temperature. A temperature lower than -130°C causes the reaction system to solidify, which lowers the reaction speed. A temperature higher than room temperature causes the reaction speed to be excessively increased, resulting in PTFE having a molecular weight larger than a desired value.

3

When a mixed solvent which contains acetone as a principal solvent is employed in synthesis, solvents which may be mixed with acetone are those which are soluble in acetone, such as acetone derivatives, alcohols, carbon tetrachloride, chloroform and dimethylformamide. Accordingly, one or more of the above-described solvents are added to acetone to obtain a mixed solvent. In the case of a mixed solvent, the proportion of the principal acetone solvent to the other solvent(s) is essential for synthesizing a low-molecular weight PTFE fine powder. Although said proportion depends on the kind of solvent which is to be mixed with acetone, it is preferable that acetone account for about 60% by volume or more of the total volume of the entire solvent and the other solvent(s) for the balance, i.e., about 40% or less. If the proportion of the solvent(s) mixed with acetone exceeds 40% by volume, the reaction system unfavorably may become non-uniform. The proportion of the charged TFE to the total volume of the entire solvent is set at 40%, preferably 30%, by volume. This is the same as the case wherein the solvent consists of acetone only. If the mixed solvent satisfies the above-described condition, a polymerization yield of 100% is obtained at an irradiation dose of 2 Mrad or less for the above-described charge composition in the same way as in the case of using a solvent which contains acetone only. The resultant PTFE has a molecular weight and a particle diameter which are similar to those in the case of using an acetone solvent only. It should be noted that the temperature of the reaction system which is preferable for obtaining a low-molecular weight PTFE fine powder using a mixed solvent is limited to the same temperature range as that in the case of using an acetone solvent only.

As has been described in detail, the PTFE producing process according to the present invention is most suitable for production of a low-molecular weight PTFE fine powder and enables a charged raw material to be formed into a desired product simply by carrying out ionizing radiation at a relatively low dose. This is an advantage which is not found in the conventional manufacturing processes. Accordingly, the process of the invention enables a low-molecular weight PTFE fine powder to be produced more easily and at a lower cost than the prior art. From the viewpoint of irradiation cost alone, since the process according to the present invention permits a polymerization yield of 100% to be obtained at a relatively low dose, the irradiation cost is one-tenth of that in the case of the conventional process wherein PTFE scrap is formed into a low-molecular weight PTFE by means of irradiation.

The present invention will be described hereinunder in more detail by way of Examples, but it should be understood that the invention is by no means limited thereto.

Example 1:

In the case of a charge composition in which the concentrations of TFE and the acetone solvent were 1 vol% and 99 vol%, respectively:

A thick-walled glass ampoule of 10 cc, was charged with 4.95 cc of acetone, and the ampoule was attached to a vacuum line. The contents of the ampoule were solidified with liquid nitrogen (-196°C) and then degassed for several minutes. Thereafter, the contents of the ampoule were thawed and subsequently solidified with liquid nitrogen and then degassed again. After the operation (freeze degassing) of solidification, degassing and thawing had been repeated several times, 0.05 cc (measured at -80°C) of TFE was introduced into the ampoule through the vacuum line. TFE was transferred from a TFE container to a measuring ampoule through the vacuum line and freeze-degassed in advance, and the TFE was transferred from the measuring ampoule to the ampoule containing acetone. After the introduction of TFE, the contents of the ampoule were degassed again and then heat-sealed under a vacuum of $10^{-4}$ Torr to prepare a sample for $\gamma$-ray irradiation. The sample was irradiated with $\gamma$-rays from cobalt-60 at a dose rate of $4 \times 10^5$ rad/h with the ampoule held at a temperature of -80°C. With this charge composition (TFE: 1 vol%; acetone: 99 vol%), the polymerization yield was 100% at a dose of 1.56 Mrad. Polymerization yield was calculated according to the following equation:

$$\text{Polymerization yield (\%)} = \frac{\text{Weight (g) of resultant PTFE}}{\text{Weight (g) of charged TFE}} \times 100$$

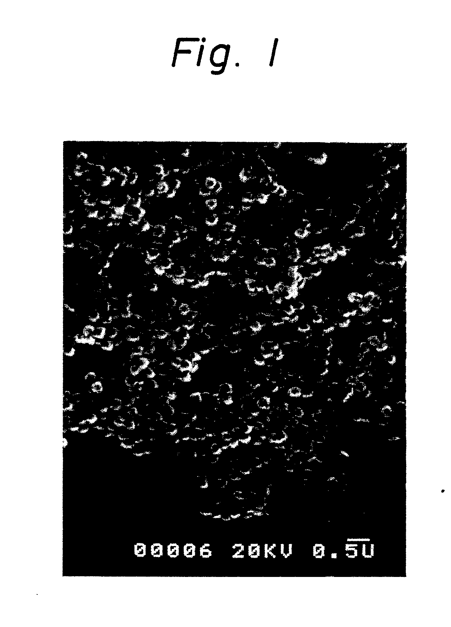

The resultant PTFE was a pale blue gel in which PTFE was dispersed in acetone. Acetone was then evaporated therefrom to obtain a white PTFE fine powder. The particle diameter was about 0.3 micron. Fig. 1 shows a photograph of the obtained fine powder taken with a scanning electron microscope of 10,000 magnification. Although the molecular weight of the PTFE fine powder could not be directly measured, the melting point thereof was measured and found to be 319°C. Accordingly, the molecular weight of the PTFE was found to be about 13,000 which is a low-molecular weight, by performing calculation using the measured value for the melting point and in accordance with the aforementioned relationship between molecular weight and melting point.

Example 2:

In the case of a charge composition in which the concentrations of TFE and the acetone solvent were 10 vol% and 90 vol%, respectively:

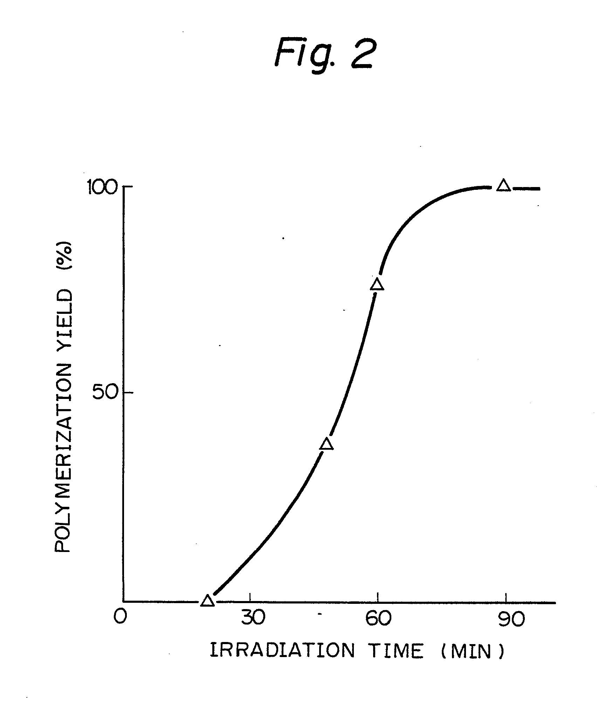

In the same way as in Example 1, 4.5 cc of acetone and 0.5 cc of TFE were charged in a thick-walled glass ampoule of 10 cc to prepare samples. The samples were subjected to γ-ray irradiation at a dose rate of $2.4 \times 10^5$ rad/h and at a temperature of -80°C with the irradiation time varied. The results are shown in Fig. 2 which is a graph showing the relationship between polymerization yield and irradiation time. The resultant PTFE was a fine white powder having a particle diameter of about 0.2 micron and a melting point of 324°C, and the molecular weight thereof was found to be about 35,000 by calculation.

Example 3:

In the case of a charge composition in which the concentrations of TFE and the acetone solvent were 30 vol% and 70 vol%, respectively:

Acetone and TFE were charged into a thick-walled glass ampoule in the same manner as in Example 1 except that the amounts of TFE and acetone in this Example were 1.5 cc and 3.5 cc, respectively. In the charge composition in which the concentration of TFE was 30 vol%, a polymerization yield of 100% was obtained at an irradiation dose of 0.5 Mrad under the conditions that the dose rate was $4 \times 10^5$ rad/h and the sample temperature at the time of irradiation was -80°C.

The resultant PTFE fine powder had a particle diameter of about 0.4 micron and a melting point of 326°C. The value was 7°C higher than the melting point of the PTFE obtained in Example 1, and from this measured value for the melting point the molecular weight of the PTFE was found to be about 105,000 by calculation

Example 4:

In the case of a charge composition in which the concentration of TFE was 10 vol% and the concentration of a mixed solvent consisting of acetone and chloroform was 90 vol%:

In accordance with the procedure described in Example 1, 0.5 cc of TFE, 4.0 cc of acetone and 0.5 cc of chloroform were charged in a thick-walled glass ampoule. The mixing ratio of acetone to chloroform was 8:1 by volume. Under the conditions that the dose rate was $4 \times 10^5$ rad/h and the sample temperature was -80°C, a polymerization yield of 100% was obtained at a dose of 0.6 Mrad. The resultant PTFE had a particle diameter of about 0.3 micron and a melting point of 323°C, and the molecular weight was found to be about 26,000 by calculation.

Example 5:

In the case of a charge composition in which concentration of TFE was 10 vol% and the concentration of a mixed solvent consisting of acetone and methyl ethyl ketone was 90 vol%:

A sample for irradiation was prepared in accordance with the procedure described in Example 1. In this Example, however, 0.5 cc of TFE, 3.60 cc of acetone and 0.90 cc of methyl ethyl ketone were charged in a glass ampoule, and the volume ratio of acetone to methyl ethyl ketone was set at 4:1. The polymerization yield was 56.7% when irradiation was applied at a dose of 0.5 Mrad under the conditions that the dose rate was $4 \times 10^5$ rad/h and the sample temperature was -80°C. The resultant PTFE was a fine white powder having a particle diameter of about 0.3 micron and a melting point of 327°C. Since the above-described relationship between melting point and molecular weight is applicable to melting points not higher than 326°C, it cannot be applied directly to this case. However, the molecular weight was judged to be about 170,000 by extrapolation performed on the basis of said relationship.

Example 6:

In the case where 10 vol% of TFE and 90 vol% of acetone solvent were charged in a stainless steel ampoule and bubbling was carried out using nitrogen gas:

In a 20 cc stainless steel ampoule, 1.0 cc of TFE and 9.0 cc of acetone were charged in the same way as in Example 1, and the contents of the ampoule was subjected to bubbling using nitrogen gas for 10 minutes in place of degassing. Thereafter, $\gamma$-ray irradiation was effected for 2 hours at a dose rate of $4.5 \times 10^5$ rad/h and at a sample temperature of -120°C. As a result, it was possible to obtain a PTFE fine powder having a particle diameter of about 0.2 micron at a polymerization yield of 87% and a melting point of 316°C and the molecular weight was found to be about 9,400 by calculation.

Example 7:

In the case where 1 vol% of TFE and 99 vol% of acetone solvent were charged in a stainless steel ampoule and irradiation was carried out at room temperature after degassing:

In the same way as in Example 1, 9.9 cc of acetone and 0.1 cc of TFE were charged in a stainless steel ampoule of 20 cc to prepare samples. After being degassed, the samples were subjected to $\gamma$-ray irradiation at a dose rate of $3.8 \times 10^5$ rad/h at room temperature for 2 hours. As a result, it was possible to obtain PTFE fine powder having a particle diameter of about 0.2 micron at a polymerization yield of 30% and a melting point of 321°C, and the molecular weight was found to be about 17,000 by calculation.

Example 8:

In the case of a charge composition in which the concentrations of TFE and an acetone solvent were 10 vol% and 90 vol%, respectively, and electron irradiation was effected:

In accordance with the procedure described in Example 1, 4.5 cc of acetone and 0.5 cc of TFE were charged in a thick-walled glass ampoule to prepare samples. The samples were subjected to electron beam irradiation at $2.4 \times 10^5$ rad and at a temperature of -80°C. The resultant PTFE was a fine white powder having a particle diameter of about 0.2 micron at a polymerization yield of 89% and a melting point of 323°C, and the molecular weight thereof was found to be about 26,000 by calculation.

## Claims

1. A process for producing a polytetrafluoroethylene fine powder having a number-average molecular weight of from 7,000 to 200,000 and a particle diameter of 5 microns or less, which comprises: preparing a reaction system by adding tetrafluoroethylene monomer to a solvent consisting of acetone only or a mixed solvent containing acetone as a principal solvent so that the concentration of said monomer is 40% by volume or less; removing oxygen from said reaction system substantially completely; and subjecting said reaction system to ionizing radiation at a dose of 2 Mrad or less while maintaining the temperature of said reaction system between -130°C and room temperature.

2. The process of claim 1 for preparing polytetrafluoroethylene fine powder having a number-average molecular weight of from 10,000 to 180,000 and a particle diameter of 0.5 micron or less, which comprises: preparing a reaction system by adding tetrafluoroethylene monomer to a solvent consisting of acetone only or a mixed solvent containing acetone as a principal solvent so that the concentration of said monomer is 30% by volume or less; removing oxygen from said reaction system substantially completely; and subjecting said reaction system to ionizing radiation at a dose of 2 Mrad or less while maintaining the temperature of said reaction system between -80°C and -30°C.

3. The process of claim 1 or 2 in which said ionizing radiation is selected from the group consisting of $\gamma$-ray and electron beam irradiation.

4. The process of claim 1 in which the temperature of said reaction system is between -100°C and -20°C.

# Fig. I

00006  20KV  0.5U

# Fig. 2